# EUROPEAN PATENT APPLICATION

(11) **EP 2 154 840 A1**
(43) Date of publication of application: **17.02.2010**
(21) Application number: 08700682.1
(22) Date of filing: 18.01.2008
(51) Int. Cl.: H04L 12/56

(54) **METHOD AND APPARATUS FOR SUPPORTING USER TERMINAL TO ACCESS NETWORK IN THE FIXED ACCESS NETWORK**

(30) Priority: 30.04.2007 CN 200710040400
(71) Applicant: Alcatel Lucent, 75008 Paris (FR)
(72) Inventor: WEN, Haibo, Shanghai 201206 (CN)
(74) Representative: BiiP cvba
(86) International application number: PCT/CN2008/000133
(87) International publication number: WO 2008/131632

(57) **Abstract**

The present invention provides a method and means for supporting user terminal to access network in fixed access network, in order to solve the problem in existing techniques that user terminal could not perform quick handover or quick NAP, NSP network discovery. According to solution of the present invention, access device in fixed access network provides network access related information, such as NAP network information, NSP network information and sub-network identifier, to user terminal in sub-network subject to it, so as to enable user terminal to perform quick handover or quick NAP, NSP network discovery.

## Description

### Technical field

The present invention relates to communication network, especially relates to a method and means for notifying and obtaining network information of communication network in fixed access network.

### Background of the invention

In a Base Station Subsystem (BSS) of mobile communication network, a base station sends the identifier of the network where it is located, e.g. the identifier of the base station, to all the mobile terminals, e.g. laptop computer, mobile phone and the like, in its signal coverage area, so that a mobile terminal could trigger handover when appropriate, for example when the mobile terminal is about to move out of the coverage area of the base station and to move in the coverage area of another base station.

Moreover, a base station further broadcasts the network information of its associated network access provider and network services provider to each mobile terminal. Hereinafter, the network information of a network access provider will be referred to as NAP network information, which could only comprise NAP network identifier information at present, and the network information of a network services provider will be referred to as NSP network information which could only comprise NSP network identifier information at present. Wherein, the NSP network information comprises the service contents and corresponding toll criterions provided by the NSP network, therefore, a mobile terminal could choose NAP network and NSP network for its network access according to its pre-stored information and the NAP/NSP network information obtained from a base station.

However, in existing communication network that provides user access by fixed access network, such as Digital Subscriber Line (DSL), the access device therein, such as DSLAM, does not provide NAP network information or NSP network information to user devices such as desktop computer, laptop computer or PDA, etc, being connected to the device via a DSL modem or a DSL modem with a wireless access point, of the user network. In practical application, a user indicate the required NSP to network side in authentication requesting message according to his/her subscribing information related to a NSP, and the authentication requesting message is send to an NSP network appointed by the user for authentication, when the authentication is done, the user will be assigned an IP address.

It is noticeable that a user terminal controlled by fixed access network could not flexibly choose a NAP or NSP.

Furthermore, an access device in a fixed access network does not provide a user terminal with the network identifier, characteristic information unique in at least the corresponding NAP network, corresponding to the user network to which it belongs at present. However, since fixed networks and mobile networks increasingly tend to merge, it is eventual the case that a mobile terminal moves from the coverage area of a base station to a user network, in which the user access is provided by a fixed access network. In this case, a mobile terminal could not get aware of what network it moves in depending on existing techniques, therefore the mobile terminal could not perform quick handover or set up corresponding service status or service path in new network even if it is a multi-mode terminal, e.g. a terminal with a WiMAX access port and a WiFi/WLAN access port, which might results in service halt.

Therefore, there is urgent need to improve access device in existing fixed access network, so as to support NAP network/NSP network choice f a user terminal, so as to adapts to the need of fixed network and mobile network merging.

### Summary of the invention

In consideration of the abovementioned problems in existing techniques, the present invention makes some improvements of the access device in a fixed access network, and the improved access device could inform at least one of NAP network information, NSP network information and characteristic information of a user network to a user terminal.

According to a first aspect of the present invention, there is provided in an access device of a fixed access network, a method for assisting user terminal in obtaining network access related information, comprising the step of: sending a first notification message to one or more user terminals in sub-networks subject to the access device via the ports respectively connected to the sub-networks, the first notification message comprising the network access related information.

According to a second aspect of the present invention, there is provided in a user terminal of a communication network, a method for obtaining network access related information, comprising the steps of: receiving a first notification message sent from an access device of a fixed access network via the port connected to the sub-network which the user terminal locates in, the first notification message comprising the network access related information; extracting the network access related information from the first notification message.

According to a third aspect of the present invention, there is provided in a network server of a communication network, a method for assisting user terminal in obtaining network access related information, comprising the steps of: receiving a second request message from an access device of the fixed access network associated with the network server, wherein the second request message is used for requesting network information of network service provider; generating a second notification message , which comprises the network information of the network service provider; sending the second notification message to the access device.

According to a fourth aspect of the present invention, there is provided in an access device of a fixed access network, a first assisting means for assisting user terminal in obtaining network access related information, comprising: a first sending means, configured to send a first notification message to one or more user terminals in sub-networks subject to the access device via the ports respectively connected to the sub-networks, the first notification message comprising the network access related information.

According to a fifth aspect of the present invention, there is provided in a user terminal of a communication network, a network information obtaining means for obtaining network access related information, comprising: a third receiving means, configured to receive a first notification message sent from an access device of a fixed access network via the port connected to the sub-network which the user terminal locates in, the first notification message comprising the network access related information; an extracting means, configured to extract the network access related information from the first notification message.

According to a sixth aspect of the present invention, there is provided in a network server of a communication network, a second assisting means for assisting user terminal in obtaining network access related information, comprising: a fourth receiving means, configured to receive a second request message from a access device of the fixed access network associated with the network server, wherein the second request message is used for requesting network information of network service provider; a fourth generating means, configured to generate a second notification message, which comprises network information of network service provider; a fourth sending means, configured to send the second notification message to the access device.

Adopting the technique solution of the present invention, user device, which just now moves in a user network of a fixed access network or already accesses the user network, could timely get aware of NAP network information, NSP network information and characteristic information of the user network, so that it is convenient for the user device to choose a NAP network and a NSP network, and to execute switch and service handover.

### Brief description of the drawings

Other features, objects and advantages of the present invention will be more apparent by reference to the following detailed description of non-limited exemplary embodiments, when taken in conjunction with the accompanying drawings:
Fig.1 illustrates a merging network of a fixed network and a mobile network;
Fig.2 illustrates the flowchart of the method for assisting user terminal in obtaining network access related information in an access device of a fixed access network according to an embodiment of the present invention;
Fig.3a illustrates the format of options added in DHCP DISCOVER message according to an embodiment of the present invention;
Fig.3b illustrates the format of NIA option of the options illustrated in Fig.3a;
Fig.4 illustrates the flowchart of the method for obtaining network access related information in a user terminal of a communication network based on DHCP protocol according to an embodiment of the present invention;
Fig.5 illustrates the flowchart of the method for assisting user terminal in obtaining network access related information in a network server of a communication network according to an embodiment of the present invention;
Fig.6 illustrates the block diagram of a first assisting means for assisting user terminal in obtaining network access related information in an access device of a fixed access network according to an embodiment of the present invention;
Fig.7 illustrates the block diagram of a network information obtaining means for obtaining network access related information in a user terminal of a communication network based on DHCP protocol according to an embodiment of the present invention;
Fig.8 illustrates the block diagram of a second assisting means for assisting user terminal in obtaining network access related information in a network server of a communication network according to an embodiment of the present invention;
Same or similar reference signs refer to same or similar apparatuses or circuits.

### Detailed description of the embodiments

Detailed description of the present invention is provided below in conjunction with the accompanying drawings.

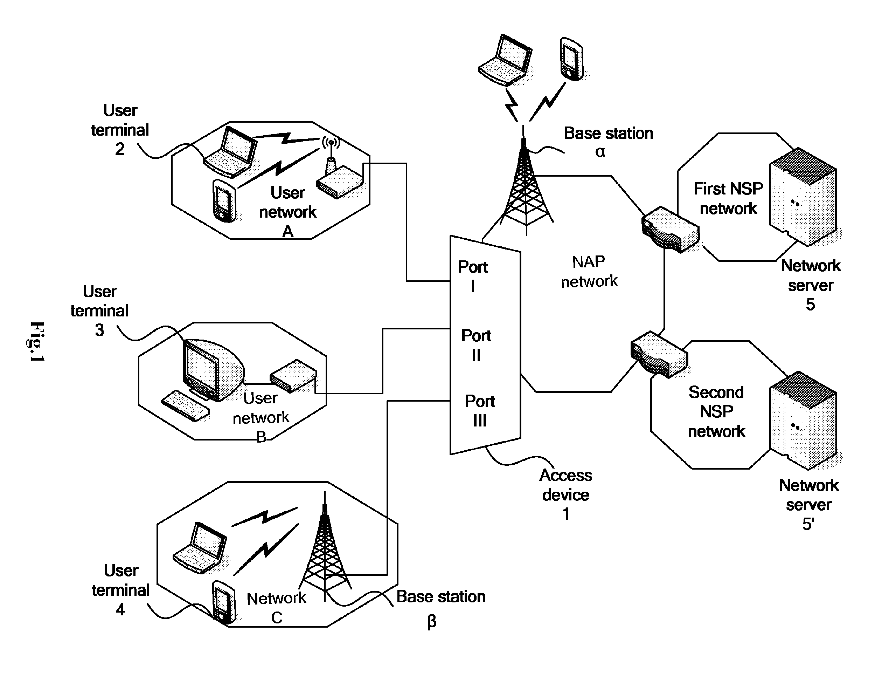

The basic idea of the present invention is summarized below in conjunction with Fig.1, which illustrates a merging network of a fixed network and a mobile network. It is obvious that the network comprises various access modes, for example, user terminal 2 (portable computer) provided with Wifi/WLAN interface accesses a NAP network by a DSL modem provided with Wireless Access Point via an access device 1 (such as a DSLAM, hereinafter referred to as AN1) of a fixed network; a user terminal 3 (desktop computer, usually bound to a user network) accesses a NAP network by a common DSL modem via AN1; each mobile terminal in the coverage area of base station α directly accesses the NAP network via base station α; specially, each mobile terminal including user terminal 4 which is a mobile PDA in network 3 controlled by base station β accesses to the NAP network via base station β and AN1. What is illustrated in Fig.1 is a typical example of merging network of a fixed network and a mobile network. Fig.1 also illustrates two NSP networks, which respectively comprises a network server 5 and a network server 5', linked with the NAP network, for example, the network server being DHCP server.

It is intelligible for those skilled in the art that a NAP network could connect to a plurality of access devices of a fixed access network similar to AN1. For the sake of conciseness, Fig.1 only illustrates AN1. An access device similar to AN1 generally connects to only one NAP network.

Hereinafter, user network A, user network B and network C controlled by base station β are generally called as sub-network and respectively referred to as sub-network A, sub-network B and sub-network C.

For the application of the present invention, it is advantaged to set a first assisting means of the fourth aspect of the present invention in AN1, and to set a network information obtaining means of the fifth aspect of the present invention in each user terminal, which include user terminal 2, 3, 4 illustrated in Fig.1, directly or indirectly accessing NAP network via AN1, and to set a second assisting means of the sixth aspect of the present invention in network server 5 and 5' illustrated in Fig.1.

According to the present invention, AN1 periodically, initiatively or based upon the request from the user terminals, sends network information of the NAP network and of the first and second NSP network via its each port (such as port I, II, and III, respectively connecting to user network A, user network B and base station β, as illustrated in Fig.1) to the sub-networks having a one-to-one correspondence with the ports; and assigns sub-network identifiers for sub-network A and sub-network B, the network identifiers respectively referred to as ID_A and ID_B. Preferably, ID_A and ID_B are addressable, i.e. ID_A and ID_B are unique in at least this NAP network, of course, ID_A and ID_B could also be globally unique. If AN1 already knows NAP network information and NSP network information, it could directly inform those network information to sub-networks A, B and C; if AN1 wants to provide NSP network information of the first NSP network to user terminals of each sub-network but does not possess it, then AN1 will obtain NSP network information of the first NSP network by communicating with the network server 5 illustrated in Fig.1, and inform the same downwards. Specially, for each user terminal in sub-network C, the sub-network identifier of sub-network C such as identifier of base station β could be broadcasted downwards by base station β, instead of AN1.

Therefore, every user terminal in each sub-network will be capable to get aware of sub-network identifier of the sub-network to which it currently bound and the network information of related NAP network and NSP network, so that user terminals could perform flexibly quickly NAP network discovery and NSP network discovery, whilst handover when mobile is supported. It is a case of handover that the user terminal 4, which is provided with a Wimax interface and a Wifi/WLAN interface, in sub-network C originally receiving downlink service data such as video service stream via base station β, moves from sub-network C to sub-network A, when the change of network is detected by user terminal 4, it will trigger switch and the handover of service stream depending on ID_A from AN1, for example, the user terminal 4 will request AN1 to switch off video stream originally transmitted via port III and to transmit the same video stream via port I. Of course, in order to quickly obtain information such as sub-network identifier, user terminal 4 could initiatively send a request instead of waiting for the periodic or aperiodic broadcast of AN1. Similarly, user terminal 3 in sub-network B, an exemplary case of relatively immobile terminals, could receive network information notifying message sent by AN1 via port II and get aware of NAP network information, NSP network information, etc, so as to quickly perform NAP network discovery and NSP network discovery. However, sub-network identifier from AN1 might be not quite meaningful for such terminal devices like user terminal 3.

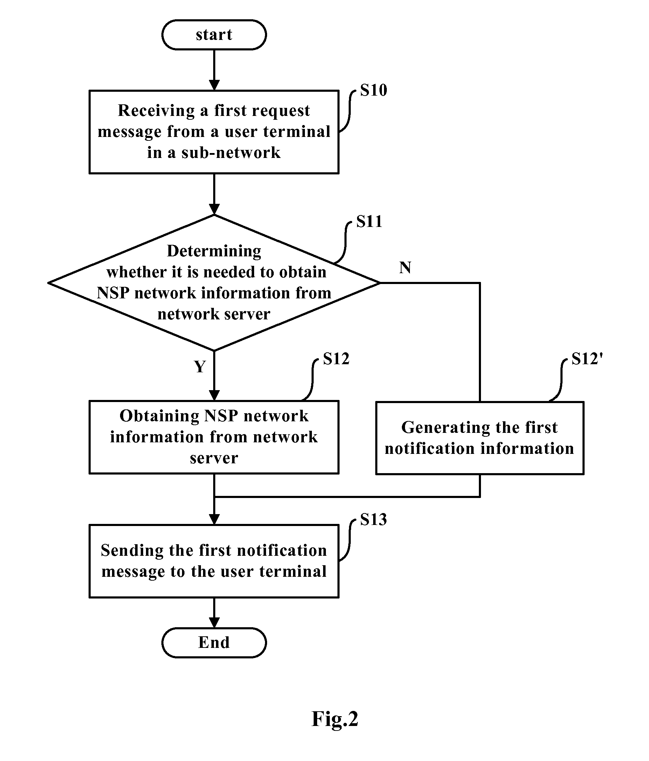

Hereinafter, descriptions of various embodiments of the first aspect of the present invention are provided below in conjunction with Fig. 1 and Fig.2.

Fig.2 illustrates the flowchart of the method for assisting user terminal in obtaining network access related information in an access device of a fixed access network according to an embodiment of the present invention. Taking the network illustrated in Fig.1 as example, wherein the network is based on DHCP protocol and network server 5, 5' are DHCP servers.

Firstly, in step 10, AN1 receives a first request message sent by user terminal 2 (hereinafter referred as UE2) of sub-network A through the wired link between sub-network A and port I via port I, through which AN1 connects to sub-network A.

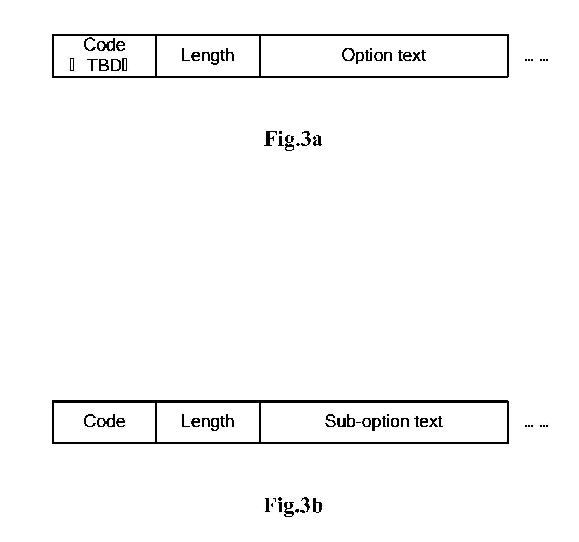

UE2 could append additional information to DHCP DISCOVER message or DHCP REQUEST message, for instance in Parameter Request List Option, so as to get the first request message. The appended additional information could be the code segment, i.e. the code used for recognize access information option, illustrated in Fig.3a, therewith, if Parameter Request List Option of DHCP DISCOVER message or DHCP REQUEST message comprises the code in the value region, it is demonstrative that UE2 needs network side to provide network access related information.

Concretely, AN1 or network server directly appends access information option, whose practical format is defined as illustrated in Fig.3a, into corresponding first notification message, such as a DHCP OFFER/DHCP ACK message, so as to provide network access related information to UE2. Wherein, the length segment denotes the total length of the option text segment in access information option; the option text segment could comprise one or more sub-options, each of which has the format as illustrated in Fig.3b. The sub-options comprise but not limit to: sub-network identifier sub-option, NAP network information sub-option and NSP network information sub-option.

According to the present invention, if UE2 wants to demonstrate which sub-option is needed to AN1, UE2 could directly insert this access information option into DHCP DISCOVER message instead of inserting code segment into the Parameter Request List Option, wherein the access information option directly inserted into DHCP DISCOVER message comprises corresponding sub-option, such as sub-network identifier sub-option, code segment illustrated in Fig.3b of each sub-option denoting code used to recognize the sub-option, the length segment of each sub-option of the DHCP DISCOVER message being zero. Therefore, after receiving the request message for requesting for network access related information from UE2, AN1 determines the type of network access related information which UE2 needs according to the access information option inserted into the request message, concretely according to code segment in the sub-option, and accordingly provides it to UE2.

It is intelligible to those skilled in the art that the first request message from UE2 could also be common DHCP DISCOVER message without any additional option, or DHCP DISCOVER message appended with other option, which denotes what kind of network access related information UE2 needs, different from the option illustrated in Fig.3a. Specially configured and arranged, the abovementioned various first request message all could trigger that AN1 provides network access related information to UE2.

After receiving DHCP DISCOVER message i.e. the first request message in step S 10, AN1 judges whether it is needed to obtain network information of network service provider, i.e. NSP network information, from network server 5 in the first NSP network and network server 5' in the second NSP network. Concretely, the judgment result depends on whether AN1 needs to provide abovementioned NSP network information to UE2, for example, whether UE2 has requested NSP network information (whether there is access information option as illustrated in Fig.3a in DHCP DISCOVER message sent by UE2), or whether AN1 has selected to provide NSP network information to UE2, as well as whether AN1 has prestored the needed NSP network information.

According to a preferable embodiment of the present invention, AN1 needs to provide sub-network identifier ID_A of sub-network A, NAP network information, NSP network information of the first NSP network and the second NSP network to UE2, e.g., in case when the DHCP DISCOVER message from UE2 comprises the three kinds of sub-option. And it is supposed that AN1 has prestored the NSP network information of the first NSP network but has not prestored the NSP network information of the second NSP network. It is intelligible to those skilled in the art that AN knows information of the NAP network illustrated in Fig.1 (currently only comprising identifier information of the NAP network), since it belongs to a certain network access provider. Generally, the first NSP network and the second NSP network belong to different NSPs.

Therefore, the judgment result of step S11 of the preferable embodiment is that AN1 needs to obtain NSP network information of the second NSP network from network server 5'. Now the method goes to step S12.

In step S12, AN1 will obtain NSP network information of the second NSP network from network server 5', such as a DHCP server or other server dedicated to provide NSP network information. Therefore, AN1 could forward DHCP DISCOVER message i.e. the first request message from UE2 to network server 5', i.e. forwarding the first request message as the second request message to network server 5', or regenerate a new request message used for asking network server 5' to provide NSP network information, i.e. generating the second request message. Therefore different possible realization process of step S 12 are given as below:
If AN1 directly forwards DHCP DISCOVER message from UE2, which is better compatible to DHCP protocol, step S 12 will be realized by the following process:
   - AN1 forwards the DHCP DISCOVER message to network server 5', i.e. the first request message from UE2 is used as the second request message by AN1;
   - AN1 receives the DHCP OFFER message, i.e. the second notification message which comprises NSP network information of the second NSP network, from network server 5'.
If AN1 regenerates a new request message used for asking network server 5' to provide NSP network information, step S 12 will be realized by the following process:
   - AN1 generates the second request message, which could be existing message in DHCP protocol or newly defined message;
   - AN1 sends the second request message to network server 5';
   - AN1 receives the second notification message, such as DHCP OFFER message which comprises NSP network information of the second NSP network appended by network server 5', from network server 5'.

After receiving DHCP OFFER message from network server 5', , AN1 appends NAP network information, NSP network information of the first NSP network and ID_A to corresponding position therein, so as to generate a first notification message which could be sent to UE2.

According to an embodiment of the present invention, each sub-option of the first notification message possess the format as below:
- sub-option segment of sub-network identifier could be provided with the format as below:
   Identifier of AN1<<16+Slot_No.<<8+user's port number
   namely a string of number in which the last 8 bits stand for the user's port number and the middle part is the slot number of corresponding user board in AN1 and the part beyond 16 bits is the identifier of AN1.

   Wherein, the identifier of AN1 could be the IP address or other addressable identifier information of AN1.
- sub-option segment of NAP network information sub-option could be defined with the format referred to the definition of WiMAX network.
- sub-option segment of NSP network information sub-option comprises the identifier information of the NSP network, such as an identifier of 24 bits or NAI of 32 bytes, wherein NSP networks that serve to the same NAP (such as the first NSP network and the second NSP network illustrated in Fig.1) need to be provided with NSP identifier of the same format.

In step S 13, the first notification message comprising ID_A, NAP network information, NSP network information of the first NSP network and NSP network information of the second NSP network will be sent to UE2. It is intelligible to those skilled in the art that AN1 could transmit the first notification message via port I since the first request message is received via port I. Generally, the first request message comprises characteristic information of UE2, such as MAC address, therefore, the first notification message could inerrably be transmitted to UE2 in virtue of port information and MAC address of UE2. Of course, it is also intelligible to those skilled in the art that AN1 could also broadcast the first notification message in sub-network A via port I.

The case that AN1 needs to obtain NSP network information from network server is described as above, in succession, the case that AN1 does not need to obtain NSP network information from network server will be described as below in conjunction with Fig.2.

It is supposed in the case that AN1 needs to provide ID_A (identifier information of sub-network A), NAP network information of NAP network and respective NSP network information of the first NSP network and the second NSP network to UE2, and AN1 has prestored the NAP network information of the NAP network, the respective NSP network information of the first and second NSP network as illustrated in Fig.1, wherein ID_A could generally be prestored in AN1, for example in a mapping list with the format of port to sub-network identifier, or be generated momentarily by AN1. Therefore, the judgment result of step S11 will be that there is no need to obtain NSP network information from network server of the first NSP network or the second NSP network.

It is visible from Fig.2 that AN1 will generate a first notification message in step S12', wherein the first notification message comprises ID_A, NAP network information and respective NSP network information of the first NSP network and the second NSP network. When the first request message is a DHCP DISCOVER message, the first notification message could be DHCP OFFER message; when the first request message is a DHCP REQUEST message, the first notification message could be DHCP ACK message. The DHCP OFFER message or DHCP ACK message preferably comprises the options illustrated in Fig.3a and Fig.3b.

After receiving the first notification message in step S12', AN1 transmit the first notification message to UE2 in sub-network A via port I in step S 13.

It is intelligible to those skilled in the art that, if AN1 only needs to provide sub-network identifier of sub-network A to UE2, AN1 does not need to communicate with network server, but directly generates the first notification message comprising ID_A, such as a DHCP OFFER message, and transmits the same to sub-network A via port I.

It is also intelligible to those skilled in the art, if AN1 only needs to provide NSP network information of the second NSP network to UE2 and has not prestored this information, AN1 could directly treat the second notification message, such as DHCP OFFER message, from network server 5' as the first notification message and transmit it to UE2.

According to another embodiment of the present invention, AN1 could initiatively send network access related information to each sub-network subject to AN1 via its respective port without the request from user terminal, and the first notification message will be broadcasted to each user terminal of a sub-network when it gets to the sub-network. It is intelligible that step S10 illustrated in Fig.2 is omissible. Concretely, sub-network identifier in network access related information sent to sub-network A is ID_A, and sub-network identifier sent to sub-network B is ID_B, whilst sub-network identifier sent to sub-network C is ID_C. The process of AN1 initiatively informing network access related information could be realized by periodically or aperiodically generating DHCP OFFER message comprising network access related information. Network access related information sent to user terminal(s) of each sub-network by AN1 could comprises at least one of the follows: NAP network information, NSP network information of the first NSP network, NSP network information of the second NSP network, sub-network identifier of corresponding sub-network.

In accordance with DHCP protocol, the Parameter Request List Option in DHCP DISCOVER message may further comprise related information of UE2 for requesting other parameter.

With the instructions of the present invention, those skilled in the art should be capable of realizing the function of AN informing other type of network access related information to user terminal in sub-network. Therefore, network access related information sent to user terminal(s) of each sub-network by AN1 could comprises at least one of the follows: NAP network information, NSP network information of the first NSP network, NSP network information of the second NSP network, sub-network identifier of corresponding sub-network, new network access related information.

According to another embodiment of the present invention, it is supposed that the Parameter Request List Option in DHCP DISCOVER message from UE2 further comprises information of UE2 for requesting other parameter from DHCP server, wherein the information is different from network access related information mentioned in the context and is supported by existing DHCP server, and that AN1 does not need to request NSP network information from network server, therefore, after receiving the first request message, such as DHCP DISCOVER message, from UE2:
- firstly, AN1 preferably generates the first notification message, comprising each network access related information requested by UE2, according to the request from UE2, and sends it to UE2;
- then, AN1 deletes the information of UE2 for requesting network access related information, such as code segment in access information option, from the DHCP DISCOVER message, and sends the DHCP DISCOVER message without the information to DHCP server, such as network server 5'. And then, DHCP server will response to the message based on existing techniques, in succession forwarded to UE2 by AN1.

The first aspect of the present invention is described in detail as above, hereinafter, corresponding method in the object to which the access device sends the first notification message, i.e. the user terminal, will be described. Related content of the first aspect is taken as reference.

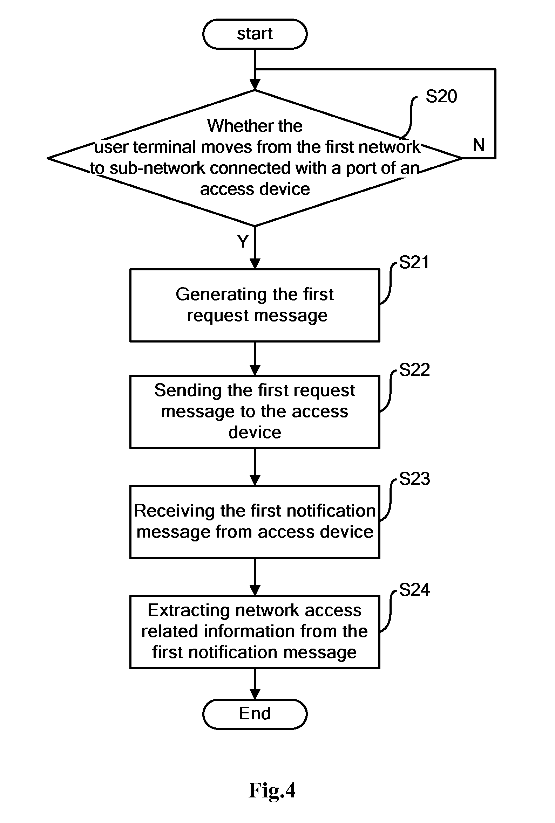

Fig.4 illustrates the flowchart of the method for obtaining network access related information in a user terminal of a communication network according to an embodiment of the present invention.

Operation in step S20 is preferably applied in a mobile terminal, such as a portable computer, PDA, smart handset. Hereinafter, UE2 illustrated in Fig.1 is taken as example. It is supposed that UE2 accesses WiMAX network via base station α, and has been receiving downlink video stream. When UE2 moves in sub-network A subject to AN1 in fixed access network, it will detect usable WiFi signals or its Ethernet network card accessing a new network. In order to execute quick handover and request to trigger AN1 setting up corresponding service status, service path, etc, for UE2 in the new network (sub-network A), UE2 needs to get aware of information like the sub-network identifier of sub-network A. In order to perform quick network discovery, UE2 further needs to get aware of NAP network information and NSP network information, such as list of network service providers serving the NAP network. UE2 not only could wait for AN1 downwards broadcasting the first notification message and extract needed information from it, but also could initiatively send a first request message to AN1 (reaching AN1 via modem in sub-network A and wired link between sub-network A and port I of AN1), so as to quicken the course of obtaining network access related information.

In this embodiment, it is supposed that UE2 initiatively request for network access related information. Therefore, when UE2 discovers of moving in a sub-network subject to an access device in a fixed access network (detecting accessing new network in bottom layer, such as discovering WiFi signal or its Ethernet network card detecting physical link), it will generate the first request message in step S21. If the present invention is applied in a network based on DHCP protocol, the first request message is preferably a DHCP DISCOVER message or a DHCP REQUEST message. Wherein the first request message comprises the code segment of the access information option illustrated in Fig.3 a and Fig.3b.

It is intelligible to those skilled in the art that the following cases could also be realized with appropriate configuration of AN1:
Case 1:
   - UE2 generates a common DHCP DISCOVER/DHCP REQUEST message, i.e. without appending code segment illustrated in Fig.3a and other option or information for indicating network access related information that UE2 needs, and sends it to AN1;
   - appropriately configured AN1 receives DHCP DISCOVER/DHCP REQUEST message and regards it as the first request message of UE2 for requesting network access related information, and based hereupon provides network access related information to UE2.
Case 2:
   - UE2 generates a DHCP DISCOVER/DHCP REQUEST message, and appends option or information, which could possess a different format from the ones illustrated in Fig.3a and Fig.3b, for indicating network access related information that UE2 needs, and sends it to AN1;
   - appropriately configured AN1 receives DHCP DISCOVER/DHCP REQUEST message, and recognizes it as the first request message of UE2 for requesting network access related information according to the option or information appended by UE2, and accordingly provides network access related information to UE2.
Case 3:
   - UE2 generates a common DHCP DISCOVER/DHCP REQUEST message and sends it to AN1;
   - appropriately configured AN1 receives the common DHCP DISCOVER/DHCP REQUEST message, and does not regard it as the first request message for requesting network access related information of the present invention, but merely forwards the message or responses to the message according to existing techniques.

After being generated, the first request message will be sent to AN1 in step S22. And then, AN1 will send the first notification message, such as a DHCP OFFER/DHCP ACK message, to UE2 according to the first aspect of the present invention, and UE2 will receive the message in step S23.

After receiving the first notification message, appropriately configured UE2 could extract network access related information, such as NAP network information, network information of the first NSP network, network information of the second NSP network, ID_A, etc.

It is intelligible to those skilled in the art that both illustrated step S20 and step S21 are omissible, namely, UE2 could directly generate the first request message without detecting network change and send it to AN1; or wait for the first notification message initiatively sent by AN1, so as to obtain network access related information.

It is also intelligible to those skilled in the art that, if UE2 does not move from the WiMAX network controlled by base station α to sub-network A but still stays in the WiMAX network, the method could go back to step S20, namely, UE2 periodically detects whether it moves from the WiMAX network to a sub-network subject to an access device in a fixed access network. Similarly, a mobile terminal already accessed a sub-network subject to AN1 preferably detects whether it moves to another sub-network, which could be subject to the same access device or a different access device to which its originally accessed sub-network is subject.

The third aspect of the present invention will be described as below, and related content of the first aspect and the second aspect is taken as reference.

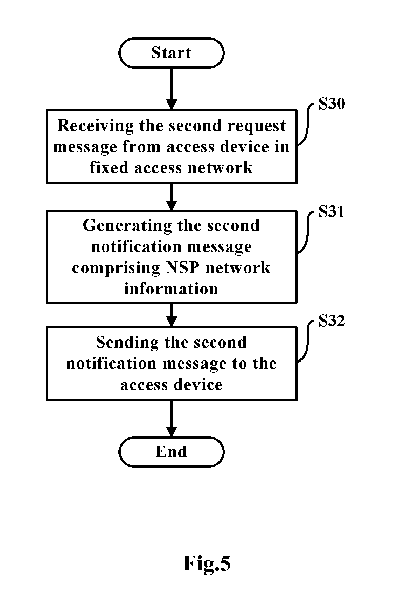

Fig.5 illustrates the flowchart of the method for assisting user terminal in obtaining network access related information in a network server of a communication network according to an embodiment of the present invention. The network server is, for instance, a DHCP server.

When AN1 needs to provide NSP network information of the second NSP network to UE2, if AN1 has prestored NSP network information of the second NSP network, it preferably does not need to request the above-mentioned information from network server 5'. If AN1 has not prestored NSP network information of the second NSP network, it sends the second request message to network server 5', the second request message could be a DHCP DISCOVER message forwarded by AN1 from UE2, wherein, AN1 takes the first request message as the second request message and sends it to network server 5'.

In step S30, network 5' receives the second request message (such as DHCP DISCOVER message) of AN1 subject to the NAP network (which is correlated to the first and second NSP network, namely, the first and second NSP networks serve to the NAP network) illustrated in Fig.1. Therefore, in step S31, network server 5' generates a second notification message, such as DHCP OFFER message, wherein the second notification message comprises NSP network information of the second NSP network, such as NSP network identifier.

And then, in step S32, network server 5' sends the generated second notification message to AN1.

As described above in the first aspect of the present invention, under the precondition AN1 needing not to request NSP network information from network server 5', AN1 could delete corresponding option/information from the first request message sent by UE2, therefore which reaches network server 5' is a DHCP DISCOVER message based on existing techniques, wherein the Parameter Request List Option might comprise other options appended by UE2 based on existing techniques for requesting what is different from network access related information mentioned in the context, and network server 5' could response to the message based on existing techniques.

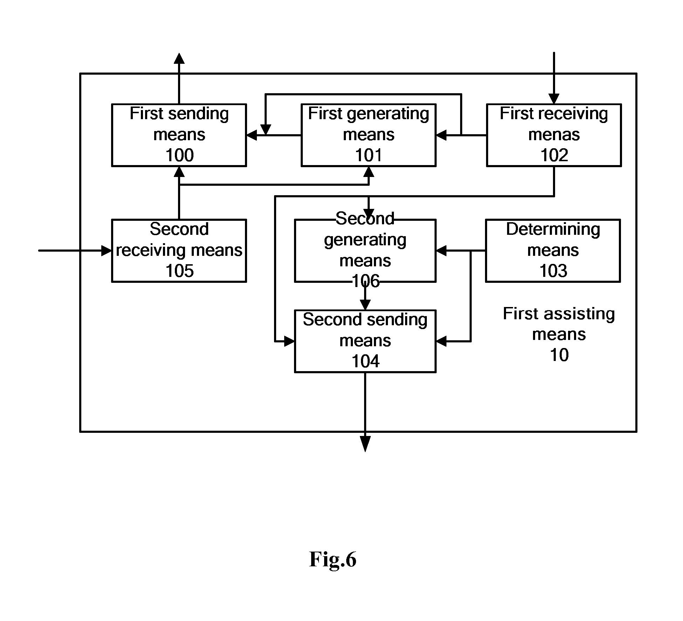

Hereinafter, means corresponding to the method of the first aspect of the present invention will be described with reference to Fig.6, in conjunction with Fig.1, Fig.2, Fig.3a and Fig.3b. Description of the first aspect of the present invention is taken as reference.

Fig.6 illustrates the block diagram of a first assisting means for assisting user terminal in obtaining network access related information in an access device of a fixed access network according to an embodiment of the present invention. The first assisting means 10 comprises: a first sending means 100, a first generating means 101, a first receiving means 102, a determining means 103, a second sending means 104, a second receiving means 105 and a second generating means 106. It is intelligible that each means and its connection illustrated in Fig.6 is not always required in some embodiment, it is only for the convenience of description below to illustrated them in the same figure.

Taking the network illustrated in Fig.1 as example, it is supposed that the network is based on DHCP protocol, the network server 5, 5' are DHCP servers.

Firstly, the first receiving means 102 receives a first request message sent by user terminal 2 (hereinafter referred as UE2) of sub-network A through the wired link between sub-network A and port I via port I, through which AN1 connects to sub-network A.

UE2 could append additional information to DHCP DISCOVER message or DHCP REQUEST message, for instance in Parameter Request List Option, so as to get the first request message. The appended additional information could be the code segment, i.e. the code used for recognize access information option, illustrated in Fig.3a, therewith, if Parameter Request List Option of DHCP DISCOVER message or DHCP REQUEST message comprises the code in the value region, it is demonstrative that UE2 needs network side to provide network access related information.

Concretely, AN1 or network server directly appends access information option, whose practical format is defined as illustrated in Fig.3a, into corresponding first notification message, such as a DHCP OFFER/DHCP ACK message, so as to provide network access related information to UE2. Wherein, the length segment denotes the total length of the option text segment in access information option; the option text segment could comprise one or more sub-options, each of which has the format as illustrated in Fig.3b. The sub-option comprises but not limit to: sub-network identifier sub-option, NAP network information sub-option and NSP network information sub-option.

According to the present invention, if UE2 wants to demonstrate which sub-option is needed to AN1, UE2 could directly insert this access information option into DHCP DISCOVER message instead of inserting code segment into the Parameter Request List Option, wherein the access information option directly inserted into DHCP DISCOVER message comprises corresponding sub-option, such as sub-network identifier sub-option, code segment illustrated in Fig.3b of each sub-option denoting code used to recognize the sub-option, the length segment of each sub-option of the DHCP DISCOVER message being zero. Therefore, after receiving the request message for requesting for network access related information from UE2, AN1 detemines the type of network access related information which UE2 needs according to the access information option inserted into the request message, concretely according to code segment in the sub-option, and accordingly provides it to UE2.

It is intelligible to those skilled in the art that the first request message from UE2 could also be common DHCP DISCOVER message without any additional option, or DHCP DISCOVER message appended with other option, which denotes what kind of network access related information UE2 needs, different from the option illustrated in Fig.3a. Specially configured and arranged, the abovementioned various first request message all could trigger that AN1 provides network access related information to UE2.

Hereinafter description is mostly according to the case illustrated in Fig.3a. After the first receiving means 102 receiving DHCP DISCOVER message, i.e. the first request message, it is preferable that the determining means 103 judges whether it is needed to obtain network information of network service provide, i.e. NSP network information, from network server 5 in the first NSP network and network server 5' in the second NSP network. Concretely, the judgment result depends on whether AN1 needs to provide abovementioned NSP network information to UE2, for example, whether UE2 has requested NSP network information, or whether AN1 has selected to provide NSP network information to UE2), and whether AN1 has prestored the needed NSP network information.

According to a preferable embodiment of the present invention, AN1 needs to provide sub-network identifier ID_A of sub-network A, NAP network information, NSP network information of the first NSP network and the second NSP network to UE2, e.g., in case when UE2 directly inserts access information option comprising the above-mentioned three kind of sub-option in DHCP DISCOVER message. And it is supposed that AN1 has prestored the NSP network information of the first NSP network but has not prestored the NSP network information of the second NSP network. It is intelligible to those skilled in the art that AN knows information of the NAP network illustrated in Fig.1 (currently only comprising identifier information of the NAP network), since it belongs to a certain network access provider. Generally, the first NSP network and the second NSP network belong to different NSPs.

Therefore, the judgment result of the determining means 103 in this preferable embodiment is that AN1 needs to obtain NSP network information of the second NSP network from network server 5'. Now the determining means 103 provides its judgment result to the second sending means 104 or the second generating means.

AN1 needs to obtain NSP network information of the second NSP network from network server 5' (such as a DHCP server or other server dedicated to provide NSP network information). Therefore, AN1 could forward DHCP DISCOVER message (i.e. the first request message) from UE2 to network server 5' (i.e. forwarding the first request message as the second request message to network server 5', so that the judgment result should be informed to the second sending means 104 and the first receiving means 102 should transfer the received first request message to the second sending means 104), or regenerate a new request message used for asking network server 5' to provide NSP network information (the determining means 103 provides the judgment result to the second generating means 106 and the second generating means 106 generates the second request message). Therefore different possible realization process of AN1 obtaining NSP network information from network server 5' are given as below:
If AN1 directly forwards DHCP DISCOVER message from UE2, which is better compatible to DHCP protocol, then:
   - the second sending means 104 forwards the DHCP DISCOVER message to network server 5', i.e. the first request message from UE2 is used as the second request message by AN1;
   - the second receiving means 105 receives the DHCP OFFER message, i.e. the second notification message which comprises NSP network information of the second NSP network, from network server 5'.
If AN1 generates a new request message used for asking network server 5' to provide NSP network information, then:
   - the second generating means 106 generates the second request message, which could be existing message in DHCP protocol or newly defined message, and the generated second request message is transferred to the second sending means 104;
   - the second sending means 104 sends the generated second request message to network server 5';
   - the second receiving means 105 receives the second notification message, such as DHCP OFFER message which comprises NSP network information of the second NSP network appended by network server 5', from network server 5'.

After receiving DHCP OFFER message from network server 5', the first generating means could append NAP network information, NSP network information of the first NSP network and ID_A to corresponding position therein, so as to generate a first notification message which could be sent to UE2 by the first sending means 100.

According to an embodiment of the present invention, each sub-option of the first notification message possess the format as below:
- sub-option segment of sub-network identifier could be provided with the format as below:
   Identifier of AN1<<16+Slot_No.<<8+user's port number
   namely a string of number in which the last 8 bits stand for the user's port number and the middle part is the slot number of corresponding user board in AN1 and the part beyond 16 bit is the identifier of AN1.

   Wherein, the identifier of AN1 could be the IP address of AN1 or other addressable identifier information of AN1.
- sub-option segment of NAP network information sub-option could be defined with the format referred to the definition of WiMAX network.
- sub-option segment of NSP network information sub-option comprises the identifier information of the NSP network, such as an identifier of 24 bits or NAI of 32 bytes, wherein NSP networks that serve to the same NAP (such as the first NSP network and the second NSP network illustrated in Fig.1) need to be provided with NSP identifier of the same format.

Hereinafter, the first notification message comprising ID_A, NAP network information, NSP network information of the first NSP network and NSP network information of the second NSP network will be sent to UE2 by the first sending means 100. It is intelligible to those skilled in the art that AN1 could transmit the first notification message via port I since the first request message is received via port I. Generally, the first request message comprises characteristic information of UE2, such as MAC address, therefore, the first notification message could inerrably be transmitted to UE2 in virtue of port information and MAC address of UE2. Of course, it is also intelligible to those skilled in the art that AN1 could also broadcast the first notification message in sub-network A via port I.

The case that AN1 needs to obtain NSP network information from network serer is described as above, in succession, the case that AN1 does not need to obtain NSP network information from network serer will be described as below in conjunction with Fig.6.

It is supposed in the case that AN1 needs to provide ID_A (identifier information of sub-network A), NAP network information of NAP network and respective NSP network information of the first NSP network and the second NSP network to UE2, and AN1 has prestored the NAP network information of the NAP network, the respective NSP network information of the first and second NSP network as illustrated in Fig.1, wherein ID_A could generally be prestored in AN1, for example in a mapping list with the format of port to sub-network identifier, or be generated momentarily by AN1. Therefore, the judgment result of the determining means 103 will be that there is no need to obtain NSP network information from network server of the first NSP network or the second NSP network.

It is visible from Fig.6 that the first generating means 101 will generate a first notification message in step S12', wherein the first notification message comprises ID_A, NAP network information and respective NSP network information of the first NSP network and the second NSP network. When the first request message is a DHCP DISCOVER message, the first notification message could be DHCP OFFER message; when the first request message is a DHCP REQUEST message, the first notification message could be DHCP ACK message. The DHCP OFFER message or DHCP ACK message preferably comprises the options illustrated in Fig.3a and Fig.3b.

The generated first notification message is transferred to the first sending means 101, and the first notification message will be sent to UE2 in sub-network A via port I by the first sending means 100.

It is intelligible to those skilled in the art that, if AN1 only needs to provide sub-network identifier of sub-network A to UE2, AN1 similarly does not need to communicate with network server, but directly generates the first notification message comprising ID_A, such as a DHCP OFFER message, comprising ID_A and transmits the first notification message to sub-network A via port I.

It is also intelligible to those skilled in the art, if AN1 only needs to provide NSP network information of the second NSP network to UE2 and has not prestored this information, AN1 could directly treat the second notification message, such as DHCP OFFER message, from network server 5' as the first notification message and transmit it to UE2.

According to another embodiment of the present invention, AN1 could initiatively send network access related information to each sub-network subject to AN1 via its respective port without the request from user terminal, and the first notification message will be broadcasted to each user terminal of a sub-network when it gets to the sub-network. Concretely, sub-network identifier in network access related information sent to sub-network A is ID_A, and sub-network identifier sent to sub-network B is ID_B, whilst sub-network identifier sent to sub-network C is ID_C. The process of AN1 initiatively informing network access related information could be realized by periodically or aperiodically generating DHCP OFFER message comprising network access related information. Network access related information sent to user terminal(s) of each sub-network by AN1 could comprises at least one of the follows: NAP network information, NSP network information of the first NSP network, NSP network information of the second NSP network, sub-network identifier of corresponding sub-network.

In accordance with DHCP protocol, the Parameter Request List Option in DHCP DISCOVER message may further comprise related information of UE2 for requesting other parameter.

With the instructions of the present invention, those skilled in the art should be capable of realizing the function of AN informing other type of network access related information to user terminal in sub-network. Therefore, network access related information sent to user terminal(s) of each sub-network by AN1 could comprises at least one of the follows: NAP network information, NSP network information of the first NSP network, NSP network information of the second NSP network, sub-network identifier of corresponding sub-network, new network access related information.

According to another embodiment of the present invention, it is supposed that the Parameter Request List Option in DHCP DISCOVER message from UE2 received by the first receiving means 102 further comprises information of UE2 for requesting other parameter from DHCP server, wherein the information is different from network access related information mentioned in the context and is supported by existing DHCP server, and that AN1 does not need to request NSP network information from network server, therefore, after receiving the first request message appended with options as illustrated in Fig. 3a, such as DHCP DISCOVER message, from UE2:
- firstly, the first generating means 101 preferably generates the first notification message, comprising each network access related information requested by UE2, according to the request from UE2, and the first notification message is sent to UE2 by the first sending means 100;
- then, the information of UE2 for requesting network access related information, such as code segment in access information option, is deleted from the DHCP DISCOVER message by a deleting means which is not illustrated in the figure, and DHCP DISCOVER message without the information is sent to DHCP server such as network server 5' by the second sending means 104 or other sending means not illustrated in the figure. And then, DHCP server will response to the message based on existing techniques, in succession forwarded to UE2 by AN1.

The fourth aspect of the present invention is described in detail as above, hereinafter, corresponding means in the object to which the access device sends the first notification message, i.e. the user terminal, will be described. Related content of the fourth aspect is taken as reference.

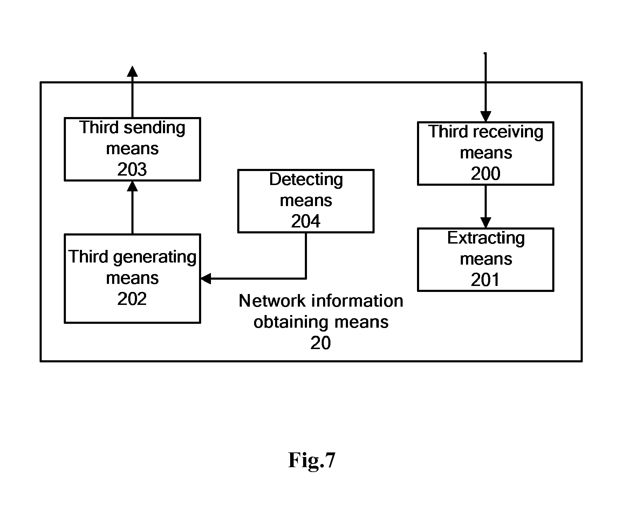

Fig.7 illustrates the block diagram of a network information obtaining means for obtaining network access related information in a user terminal of a communication network based on DHCP protocol according to an embodiment of the present invention. The network information obtaining means 20 comprises: a third receiving means 200, an extracting means 201, a third generating means 202, a third sending means 203 and a detecting means 204.

Wherein the detecting means 204 is preferably assembled in a mobile terminal, such as portable computer, PDA, smart handset. Hereinafter, UE2 illustrated in Fig.1 is taken as example. It is supposed that UE2 accesses WiMAX network via base station α, and has been receiving downlink video stream. When UE2 moves in sub-network A subject to AN1 in fixed access network, it will detect usable WiFi signals or its Ethernet network card accessing a new network. In order to execute quick handover and request to trigger AN1 setting up corresponding service status, service path, etc, for UE2 in the new network (sub-network A), UE2 needs to get aware of information like the sub-network identifier of sub-network A. In order to perform quick network discovery, UE2 further needs to get aware of NAP network information and NSP network information, such as list of network service providers serving the NAP network. UE2 not only could wait for AN1 downwards broadcasting the first notification message and extract needed information from it, but also could initiatively send a first request message to AN1 (reaching AN1 via modem in sub-network A and wired link between sub-network A and port I of AN1), so as to quicken the course of obtaining network access related information.

In this embodiment, it is supposed that UE2 initiatively request for network access related information. Therefore, when UE2 discovers of moving in a sub-network subject to an access device in a fixed access network, the first request message will be generated in the third generating means 202. If the present invention is applied in network based on DHCP protocol, the first request message is preferably a DHCP DISCOVER message or a DHCP REQUEST message. Wherein the first request message comprises the code segment of the access information option illustrated in Fig.3a and Fig.3b.

It is intelligible to those skilled in the art that the following cases could also be realized with appropriate configuration of AN1:
Case 1:
   - the third generating means 202 generates a common DHCP DISCOVER/DHCP REQUEST message, i.e. without appending code segment illustrated in Fig.3a and other option or information for indicating network access related information that UE2 needs, and the message is sent to AN1;
   - appropriately configured AN1 receives DHCP DISCOVER/DHCP REQUEST message and regards it as the first request message of UE2 for requesting network access related information, and based hereupon provides network access related information to UE2.
Case 2:
   - the third generating means 202 generates a DHCP DISCOVER/DHCP REQUEST message, and appends option or information, which could possess a different format from the ones illustrated in Fig.3a and Fig.3b, for indicating network access related information that UE2 needs, and the message is sent to AN1;
   - appropriately configured AN1 receives DHCP DISCOVER/DHCP REQUEST message, and recognizes it as the first request message of UE2 for requesting network access related information according to the option or information appended by UE2, and accordingly provides network access related information to UE2.
Case 3:
   - UE2 generates a common DHCP DISCOVER/DHCP REQUEST message (possibly by existing means) and sends it to AN1;
   - appropriately configured AN1 receives the common DHCP DISCOVER/DHCP
   REQUEST message, and does not regard it as the first request message for requesting network access related information of the present invention, but merely forwards the message or responses to the message according to existing techniques.

The generated first request message is provided to the third sending means 203 and is sent to AN1 by the third sending means.

And then, AN1 will send the first notification message, such as a DHCP OFFER/DHCP ACK message, to UE2 according to the first aspect of the present invention, and the first notification message will be received by the third receiving means 200 of UE2.

The received first notification message is provided to the extracting means 201, in succession, network access related information, such as NAP network information, network information of the first NSP network, network information of the second NSP network, ID_A, etc, is extracted from the message by the extracting means 201, for later use of network quick switch, service transfer, etc.

It is intelligible to those skilled in the art that illustrated the detecting means 204 and the third generating means 202 and step S21 are omissible, namely, UE2 could directly generate the first request message without detecting network change and send it to AN1; or could wait for the first notification message initiatively sent by AN1, so as to obtain network access related information.

It is also intelligible to those skilled in the art that, if UE2 does not move from the WiMAX network controlled by base station α to sub-network A but still stays in the WiMAX network, the detecting means will keep on above-mentioned detection (namely, detecting whether UE2 moves from the WiMAX network to a sub-network subject to an access device in a fixed access network). Similarly, a mobile terminal already accessed a sub-network subject to AN1 preferably detects whether it moves to another sub-network, which could be subject to the same access device or a different access device to which its originally accessed sub-network is subject.

The sixth aspect of the present invention will be described as below, and related content of the fourth aspect and the fifth aspect is taken as reference.

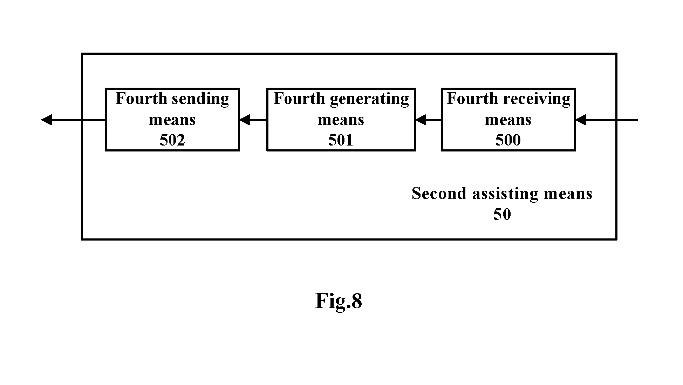

Fig.8 illustrates the block diagram of a second assisting means for assisting user terminal in obtaining network access related information in a network server of a communication network according to an embodiment of the present invention. The network server is, for instance, DHCP server. The second assisting means 50 comprises: a fourth receiving means 500, a fourth generating means 501, a fourth sending means 502.

When AN1 needs to provide NSP network information of the second NSP network to UE2, if AN1 has prestored NSP network information of the second NSP network, it preferably does not need to request the above-mentioned information from network server 5'. If AN 1 has not prestored NSP network information of the second NSP network, it sends the second request message to network server 5', the second request message could be a DHCP DISCOVER message forwarded by AN1 from UE2, wherein, AN1 takes the first request message as the second request message and sends it to network server 5'.

The fourth receiving means 500 of network 5' receives the second request message (such as DHCP DISCOVER message) of AN1 subject to the NAP network (which is correlated to the first and second NSP network, namely, the first and second NSP networks serve to the NAP netwok) illustrated in Fig.1.

Therefore, the fourth generating means 501 generates the second notification message (such as DHCP OFFER message), wherein the second notification message comprises NSP network information of the second NSP network (such as NSP network identifier).

And then, the fourth sending means 502 sends the generated second notification message to AN1.

As described above in the first aspect of the present invention, under the precondition AN1 needing not to request NSP network information from network server 5', AN1 could delete corresponding option from the first request message sent by UE2, therefore which reaches network server 5' is a DHCP DISCOVER message based on existing techniques, wherein the Parameter Request List Option might comprise other options appended by UE2 based on existing techniques for requesting what is different from network access related information mentioned in the context, and network server 5' could response to the message based on existing techniques.

Above, the embodiments of the present invention have been described in detail, but the present invention is not limited to specific systems, devices, or special protocols, those skilled in the art can make various variations or modifications within the scope of the appended claims.

## Claims

1. A method for assisting a user terminal in obtaining network access related information in an access device of a fixed access network, comprising the step of:
c. sending a first notification message to one or more user terminals in sub-networks subject to the access device via the ports respectively connected to the sub-networks, the first notification message comprising the network access related information.

2. A method as claimed in claim 1, before step c, further comprising the step of:
b. generating the first notification message, which comprises the network access related information;
the step c further comprising:
sending the generated first notification message to one or more user terminals in sub-networks subject to the access device via the ports respectively connected to the sub-networks, the first notification message comprising the network access related information.

3. A method as claimed in claim 1 or 2, before step c, further comprising the step of:
a. receiving a first request message from an user terminal in a sub-network subject to the access device via the port connected to the sub-network, wherein the first request message is used for requesting the network access related information;
the step c further comprising:
sending the generated first notification message to the user terminal in the sub-network.

4. A method as claimed in any of claims 1 to 3, wherein the network access related information comprises at least one of the following: characteristic information of the sub-network, network information of a network access provider, network information of a network service provider.

5. A method as claimed in claim 4, wherein on condition that the network access related information comprises the network information of a network service provider, the method further comprises, before step c, the steps of:
i. determining whether it is needed to obtain the network information of network service provider from network server of the network service provider;
ii. sending a second request message to the network server on condition that it is needed to obtain the network information of network service provider from the network server, wherein the second request message is used for requesting the network information of network service provider;
iii. receiving a second notification message, which comprises the network information of network service provider, from the network server.

6. A method as claimed in claim 5, before step ii, further comprising the step of:
generating the second request message;
the step ii further comprising:
ii'. sending the generated second notification message to the network server.

7. A method as claimed in any of claims 1 to 6, wherein the access device is further used for assisting the user terminal in obtaining network access related information based on DHCP protocol.

8. A method for obtaining network access related information in a user terminal of a communication network, comprising the steps of:
C. receiving a first notification message sent from an access device of a fixed access network via the port connected to the sub-network which the user terminal locates in, the first notification message comprising the network access related information;
D. extracting the network access related information from the first notification message.

9. A method as claimed in claim 8, before step C, further comprising the steps of:
A. generating a first request message;
B. sending the first request message to the access device, so as to ask the access device to provide network access related information.

10. A method as claimed in claim 9, before step A, further comprising the step of:
- detecting whether the user terminal travels from a first network to a sub-network connected to a port of the access device;
the step A further comprising:
- generating the first request message on condition that the user terminal travels from a first network to a sub-network connected to a port of the access device.

11. A method as claimed in any of claims 8 to 10, wherein the user terminal is further used for obtaining the network access related information based on DHCP protocol.

12. A method for assisting a user terminal in obtaining network access related information in a network server of a communication network, comprising the steps of:
- receiving a second request message from a access device of the fixed access network associated with the network server, wherein the second request message is used for requesting network information of network service provider;
- generating a second notification message, which comprises network information of a network service provider;
- sending the second notification message to the access device.

13. A method as claimed in claim 12, wherein the network server assists the user terminal in obtaining the network access related information based on DHCP protocol.

14. A first assisting means, in an access device of a fixed access network, for assisting a user terminal in obtaining network access related information, comprising:
a first sending means, configured to send a first notification message to one or more user terminals in sub-networks subject to the access device via the ports respectively connected to the sub-networks, the first notification message comprising network access related information.

15. A first assisting means as claimed in claim 14, wherein the first assisting means further comprises:
a first generating means, configured to generate the first notification message, which comprises the network access related information;
the first sending means is further configured to send the generated first notification message to one or more user terminals in sub-networks subject to the access device via the ports respectively connected to the sub-networks, the first notification message comprising the network access related information.

16. A first assisting means as claimed in claim 14 or 15, further comprising:
a first receiving means, configured to receive a first request message from an user terminals in a sub-network subject to the access device via the port connected to the sub-network, wherein the first request message is used for requesting the network access related information;
the first sending means further is configured to send the generated first notification message to the user terminal in the sub-network.

17. A first assisting means as claimed in any of claims 14 to 16, wherein the network access related information comprises at least one of the following: characteristic information of the sub-network, network information of a network access provider, network information of a network service provider.

18. A first assisting means as claimed in claim 17, on condition that the network access related information comprises network information of network service provider, the first assisting means further comprises:
a determining means, configured to determine whether it is needed to obtain the network information of network service provider from network server of the network service provider;
a second sending means, configured to send a second request message to the network server on condition that it is needed to obtain the network information of network service provider from the network server, wherein the second request message is used for requesting the network information of network service provider;
a second receiving means, configured to receive a second notification message, which comprises the network information of network service provider, from the network server.

19. A first assisting means as claimed in claim 18, further comprising:
a second generating means, configured to generate the second request message;
the second sending means is further configured to send the generated second notification message to the network server.

20. A first assisting means as claimed in any of claims 14 to 19, wherein, the first assisting means is further used for assisting the user terminal in obtaining network access related information based on DHCP protocol.

21. A network information obtaining means for obtaining network access related information in a user terminal of a communication network, comprising:
a third receiving means, configured to receive a first notification message sent from an access device of a fixed access network via the port connected to the sub-network which the user terminal locates in, the first notification message comprising network access related information;
an extracting means, configured to extract the network access related information from the first notification message.

22. A network information obtaining means as claimed in claim 21, further comprising:
a third generating means, configured to generate a first request message;
a third sending means, configured to send the first request message to the access device, so as to ask the access device to provide network access related information.

23. A network information obtaining means as claimed in claim 22, further comprising:
a detecting means, configured to detect whether the user terminal travels from a first network to a sub-network connected to a port of the access device;
the third generating means is further configured to generate the first request message on condition that the user terminal travels from a first network to a sub-network connected to a port of the access device.

24. A network information obtaining means as claimed in any of claims 21 to 23, wherein the network information obtaining means is configured to obtain the network access related information based on DHCP protocol.

25. A second assisting means, in a network server of a communication network, for assisting a user terminal in obtaining network access related information, comprising:
a fourth receiving means, configured to receive a second request message from a access device of the fixed access network associated with the network server, wherein the second request message is used for requesting network information of network service provider;
a fourth generating means, configured to generate a second notification message, which comprises the network information of network service provider;
a fourth sending means, configured to send the second notification message to the access device.

26. A second assisting means as claimed in claim 25, wherein, the second assisting means is further used for assisting the user terminal in obtaining the network access related information based on DHCP protocol.
